# EUROPÄISCHE PATENTSCHRIFT

(11) **EP 2 064 085 B1**
(45) Veröffentlichungstag und Bekanntmachung des Hinweises auf die Patenterteilung: **17.02.2010**
(21) Anmeldenummer: 07818186.4
(22) Anmeldetag: 17.09.2007
(51) Int. Cl.: B60K 23/04, B60K 17/35

(54) **DIFFERENTIALGETRIEBEEINHEIT FÜR KRAFTFAHRZEUGE MIT STEUERBARER ANTRIEBSKRAFTVERTEILUNG**
DIFFERENTIAL GEAR UNIT FOR MOTOR VEHICLES HAVING CONTROLLABLE DRIVING POWER DISTRIBUTION
ENGRENAGE DIFFÉRENTIEL POUR VÉHICULE À MOTEUR, COMPRENANT UNE RÉPARTITION DE LA FORCE MOTRICE POUVANT ÊTRE CONTRÔLÉE

(30) Priorität: 18.09.2006 AT 6812006
(43) Veröffentlichungstag der Anmeldung: 03.06.2009
(73) Patentinhaber: Magna Steyr Fahrzeugtechnik AG & Co. KG, 8041 Graz (AT)
(72) Erfinder: ZÖHRER, Franz, A-9020 Klagenfurt (AT)
(74) Vertreter: Harringer, Thomas
(86) Internationale Anmeldenummer: PCT/EP2007/008072
(87) Internationale Veröffentlichungsnummer: WO 2008/034572

(56) Entgegenhaltungen:
- DE-A1- 3 536 682
- DE-A1- 3 617 074
- DE-A1- 3 642 503
- GB-A- 2 321 287

## Beschreibung

Die Erfindung betrifft eine Differentialgetriebeeinheit für Kraftfahrzeuge zur steuerbaren Verteilung der Antriebskraft auf zwei Ausgangswellen, bestehend aus einem Gehäuse und darin einem Differentialgetriebe mit einem Eingangsglied und zwei mit den Ausgangswellen antriebsverbundenen Ausgangsgliedem, einem antriebsseitig mit dem Eingangsglied des Differentialgetriebes antriebsverbundenen (Unter- beziehungsweise) Übersetzungsgetriebe und zwei benachbarten hydraulisch betätigten steuerbaren Kupplungen, die einerseits mit der Abtriebsseite des Übersetzungsgetriebes und andererseits mit je einer Ausgangswelle antriebsverbunden sind, sodass den Ausgangswellen nach Maßgabe der Stellung der Reibungskupplungen ein zusätzliches Drehmoment mitteilbar ist, wobei die Kupplungen je einen Innenteil, einen Aussenteil, ein Lamellenpaket und einen Anpresskolben aufweisen.

Derartige Differentialgetriebeeinheiten sind sowohl als Zwischenachsdifferential eines allradangetriebenen Kraftfahrzeuges zur Verteilung der Antriebkraft auf die Vorderachse und die Hinterachse, als auch als Achsdifferential zur Verteilung der Antriebkraft auf die Räder einer Achse einsetzbar. Im ersten Fall sind die beiden Ausgangswellen mit den Achsen antriebverbunden, im zweiten Fall mit den einzelnen Rädern der Achse.

Aus der gattungsbildenden EP 662 402 B1, die ein Achsdifferential zum Gegenstand hat, ist es bekannt, beide Reibungskupplungen auf derselben Seite des Differentialgetriebes anzuordnen. Dabei ist das Übersetzungsgetriebe abtriebsseitig mit dem den beiden Reibungskupplungen gemeinsamen Aussenteil antriebsverbunden. Das aber erfordert die getrennte Zufuhr des Druckmediums für die voneinander unabhängige Betätigung der Reibungskupplungen über zwei Dreheintragungen und eine unbefriedigende Anordnung der Betätigungsorgane. Weiters sind jeweils die Innenteile der beiden Reibungskupplungen mit einer Ausgangswelle verbunden. Diese Anordnung ist schwer montierbar und auch bei entsprechend geteiltem Gehäuse für Wartung und Reparatur schwer zugänglich.

Es ist daher Aufgabe der Erfindung, diesen Mängeln abzuhelfen und eine Anordnung vorzuschlagen, die die notorischen Dreheintragungen vermeidet und leicht montierbar und zugänglich ist.

Erfindungsgemäß wird das mit den kennzeichnenden Merkmalen des ersten Anspruches erreicht. Dadurch, dass zwischen den beiden Kupplungen ein gehäusefester Zwischenteil angeordnet ist, der die hydraulische Betätigung enthält, entfallen die Dreheintragungen und sind alle Elemente der hydraulischen Betätigung, einschließlich der Zufuhrleitungen, in einem nicht rotierenden Bauteil zusammengefasst. Die Wirkverbindung zwischen der hydraulischen Betätigungsorgane im Zwischenteil und den Anpresskolben der Reibungskupplungen wird in bewährter Weise über axial wirkende Wälzlager hergestellt. Diese Anordnung wird dadurch möglich, dass die Reibungskupplungen "spiegelverkehrt" angeordnet sind, sodass der Aussenteil der ersten Kupplung und der Innenteil der zweiten Kupplung die treibenden Primärseiten sind. Das und die dadurch mögliche Disposition der Ausgangswellen ergibt bereits eine Verbesserung bei Montage und Wartung. Insgesamt ist diese Anordnung unabhängig von der Bauweise des Differentialgetriebes (Planeten oder Kegelrad) und des Übersetzungsgetriebs (festachsig oder Planeten)

In einer bevorzugten Ausbildung enthält der Zwischenteil beiderseits je einen Ringkolben, der über ein Drucklager auf den Anpresskolben der zugeordneten Reibungskupplung einwirkt (Anspruch 2). Dank der erfindungsgemäßen Anordnung können großflächige Ringkolben zur Ausübung der Anpresskräfte eingesetzt werden und die Reaktionskraft wird ohne irgendwelche Lager zu belasten direkt ins Gehäuse abgeleitet.

Weiters können die für die Betätigung der Reibungskupplungen bestimmten Steuerventile mit dem Zwischenteil verbunden sein (Anspruch 3), sodass die gesamte hydraulische Betätigung in einem austauschbaren Bauteil vereint ist. Noch besser ist es, wenn die Steuerventile im Inneren des Zwischenteiles enthalten sind (Anspruch 4). So sind die Ventile vor äusseren Einwirkungen geschützt, und die Einbausilhouette der Differentialgetriebeeinheit ist frei von abstehenden Teilen.

In einer vorteilhaften Weiterbildung enthält der Zwischenteil eine Ölpumpe, wobei die den Zwischenteil durchsetzende Welle mit einem Rotor der Ölpumpe antriebsverbunden ist (Anspruch 5). Dadurch hat der Kupplungsteil der Differentialgetriebeeinheit seine eigene autonome Druckölquelle, die obendrein bereits in dem die anderen hydraulischen Bauteile enthaltenden Zwischenteil angebracht ist, sodass die Verbindungskanäle zu den Ventilen und Druckkolben sehr kurz sind und nur vernachlässigbare Druckverluste verursachen.

Vorzugsweise ist die Ölpumpe eine Pumpe vom Gerotor -Typ mit einem Innenrotor auf der den Zwischenteil durchsetzenden Welle und einem exzentrischer Aussenrotor, der in dem Zwischenteil drehbar geführt ist (Anspruch 6). So ist durch Einbau von nur zwei Bauteilen in den Zwischenteil eine besonders effiziente Pumpe geschaffen, wobei der Saug- und der Druckraum im Zwischenteil ausgebildet ist.

Besonders gut einbaubar und zugänglich ist der alle Hydraulikelemente enthaltende Zwischenteil, wenn der die beiden Reibungskupplungen enthaltende Teil des Gehäuses eine achsnormale Teilungsfuge in Form einer Paßfläche aufweist, an der ein Gehäusedeckel und der Zwischenteil anschließen (Anspruch 7). Vorzugsweise ist der Zwischenteil eine einerseits bezüglich des Gehäuses und andererseits bezüglich des Gehäusedeckels zentrierte Platte, deren äusserer Rand die Gehäusekontur bildet (Anspruch 8). Der Zwischenteil ist so zwischen den Flanschen des Gehäuses und des Deckels zentriert aufgenommen und mit gemeinsamen Bolzen verschraubt. Er reicht bis nach aussen, sodass er von aussen für den Anschluss von Steuerleitungen zugänglich ist.

Im Folgenden wird die Erfindung anhand von Abbildungen beschrieben und erläutert. Es stellen dar:
- Fig. 1: Einen Längsschnitt durch eine erfindungsgemäße Differentialgetriebeeinheit,
- Fig. 2: dessen die Kupplungen enthaltenden Teil, vergrößert.

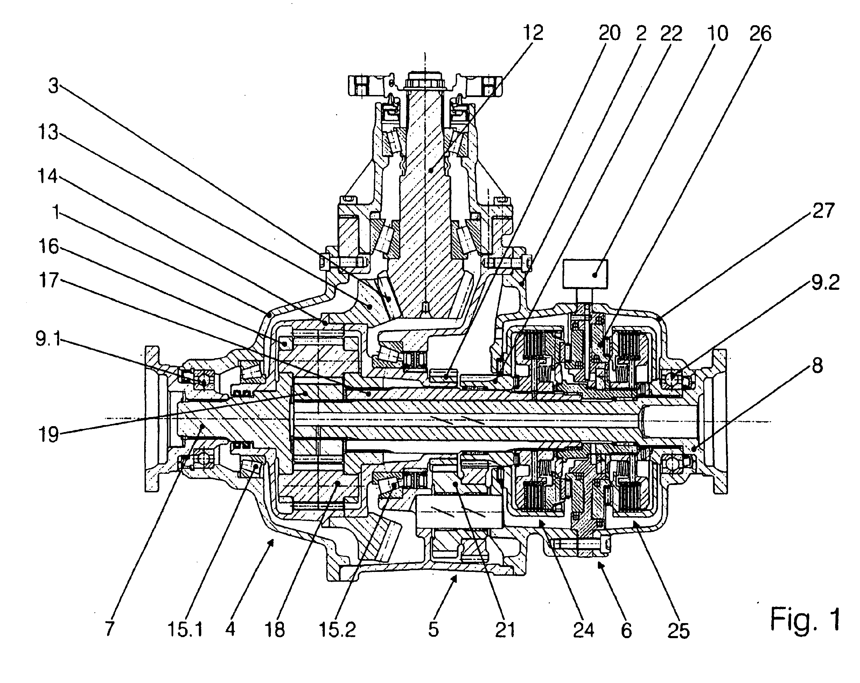

In **Fig. 1** ist das Gehäuse einer Differentialgetriebeeinheit insgesamt, unabhängig von eventuellen Teilungen, mit 1 bezeichnet, lediglich der die Kupplungen enthaltende Gehäuseteil mit 2. Die Differentialgetriebeeinheit besteht im Wesentlichen aus folgenden vom Gehäuse 1, 2 aufgenommenen Teilen: Einem Eingangsgetriebe 3, hier ein Winkelgetriebe, einem Differentialgetriebe 4, hier als Planetendifferential ausgeführt, einem Übersetzungsgetriebe 5 und einer im Gehäuseteil 2 untergebrachten Kupplungsgruppe 6. Weiters ist eine erste Ausgangswelle 7 und eine zweite Ausgangswelle 8 vorhanden. Diese führen beim abgebildeten Ausführungsbeispiel zu den Rädern einer Achse, sie könnten aber auch, wenn es sich um ein Zwischenachsdifferential eines Allradfahrzeuges handelt, zu jeweils einer Achse des Fahrzeuges führen. Die Ausgangswellen 7,8 sind zueinander in nicht näher bezeichneten Nadellagern zentriert und gemeinsam mittels Lagern 9.1 und 9.2 im Gehäuse 1, 2 gelagert. Eine Steuervorrichtung 10 ist nur angedeutet, sie enthält Steuerventile und/oder eine Steuerelektronik.

Der Kraftfluss durch die Differentialgetriebeeinheit beginnt hier mit dem von einem Triebling 12 und einem Tellerrad 13 gebildeten Winkelgetriebe 3. Das Tellerrad 13 ist mit einem Differentialgehäuse 14 drehfest verbunden, welches innen als Hohlrad ausgebildet ist und so das Eingangsglied des Differentialgetriebes 4 bildet. Es ist mittels Wälzlagern 15.1, 15.2 im Gehäuse 1 gelagert und enthält einen Planetenträger 16 mit Planetenrädern 18 und ein Sonnenrad 19. Der Planetenträger 16 ist einerseits mit der ersten Ausgangswelle 7 und andererseits mit einer Hohlwelle 17 drehfest verbunden beziehungsweise einstückig. Das Sonnenrad 19 ist mit der zweiten Ausgangswelle 8 drehfest verbunden.

Auf das Differentialgetriebe 4 folgt im Kraftfluss das Übersetzungsgetriebe 5. Dazu ist ein Antriebszahnrad 20 an der der Kupplungsgruppe 6 zugewandten Seite des Differentialgehäuses angebracht. Es treibt über ein Vorgelege 21 untersetzt oder, vorzugsweise, übersetzt ein Abtriebszahnrad 22, das bereits der Kupplungsgruppe 6 angehört. Diese besteht im wesentlichen aus einer ersten Reibungskupplung 24, einer zweiten Reibungskupplung 25 und einem gehäusefesten Zwischenteil 26, welcher die Teile der Betätigungshydraulik für beide Kupplungen enthält. Der Zwischenteil 26 ist in seiner Grundform eine dicke planparallele Platte, welche an einer Passfläche 28 des Kupplungsgehäuses 2 mit einer Seite anliegt. An der anderen Seite schließt ein Deckel 27 an, der auch das Lager 9.2 der zweiten Ausgangswelle 8 trägt.

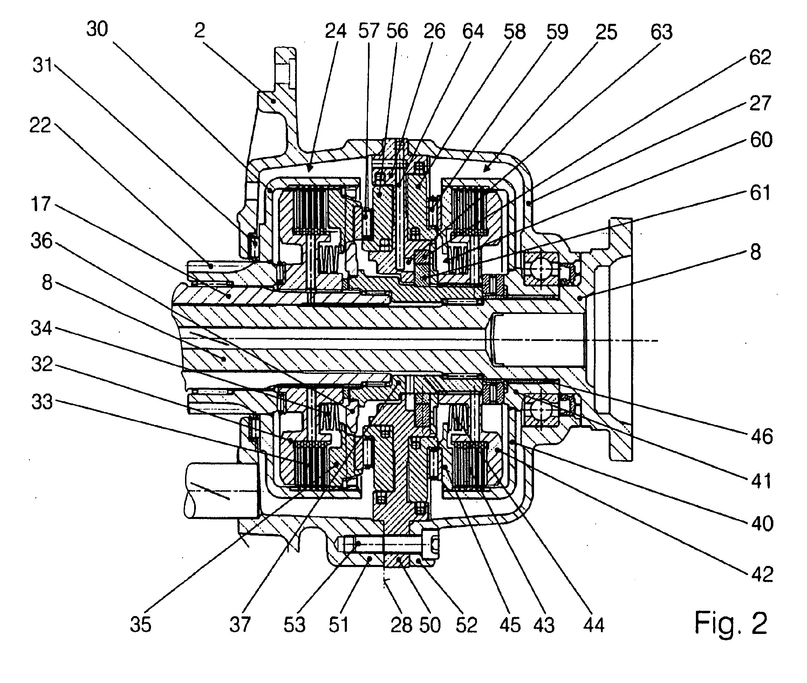

Anhand der **Fig. 2** werden die Kupplungen 24, 25 näher beschrieben. Die erste Reibungskupplung 24 umfasst einen glockenförmigen und in einem Spurlager 31 am Gehäuse 2 abgestützten Außenteil 30, einem auf der Hohlwelle 17 sitzenden Innenteil 32, einem Lamellenpaket 33 üblicher Bauart, einer aus Tellerfedern zusammengesetzten Kupplungsfeder 34 und einem Druckring 35. Mittels des Druckringes 35 wird das aus abwechselnd mit dem Außenteil 30 und dem Innenteil 32 drehfest verbundenen Lamellen bestehende Lamellenpaket 33 gegen die Kraft der Kupplungsfeder 34 zusammengedrückt. Der Kupplungsaußenteil 30 ist an seiner dem Spurlager 31 abgewandten Seite mit einer Kuppelscheibe 36 drehfest verbunden, welche fest auf einer Zwischenwelle 37, die eine den Zwischenteil 26 durchsetzende Hohlwelle ist, sitzt.

Die zweite Reibungskupplung 25 umfasst einen mit der Zwischenwelle 37 drehfest verbundenen Innenteil 42, ein Lamellenpaket 43, eine Kupplungsfeder 44, einen Druckring 45 und einen glockenförmigen Außenteil 40, der mittels einer Nabe 41 und einer Kuppelverzahnung 46 drehfest mit der zweiten Ausgangswelle 8 verbunden ist.

Der Rand 50 des Zwischenteiles 26 sitzt zentriert zwischen einem Flansch 51 des Getriebegehäuseteiles 2 und einem Flansch 52 des Deckels 27. Alle drei Teile sind mittels über den Umfang verteilter Gewindebolzen 53 fest verbunden. So ist nach Ausziehen der zweiten Ausgangswelle 8 und Lösen der Gewindebolzen 53 der Deckel 27 und der Zwischenteil 26 leicht abnehmbar. Auf diese Weise sind beide Kupplungen 24, 25 für Reparaturen gut zugänglich und der alle Elemente der Betätigungshydraulik enthaltende Zwischenteil 26 ist auf einfache Weise austauschbar.

Der Zwischenteil 26 enthält auf seiner der ersten Reibungskupplung 24 zugekehrten Seite einen ersten Ringkolben 56, der in einer zylindrisch-kreisringförmigen Ausnehmung des Zwischenteiles 26 in axialer Richtung verschiebbar geführt ist. Ebenso enthält der Zwischenteil auf seiner der zweiten Reibungskupplung 25 zugekehrten Seite einen zweiten gleichartigenRingkolben 58. Die Ringkolben 56, 58 wirken jeweils über ein hier als Nadellager ausgebildetes Drucklager 57, 59 auf die Druckringe der jeweiligen Reibungskupplung 24, 25.

Der Zwischenteil 26 selbst ist in axialer Richtung betrachtet ebenfalls ein Kreisring, dessen innerer Kreis von der Zwischenwelle 37 durchsetzt ist. An diesem inneren Kreis ist eine Ölpumpe 60 vom Gerotor-Typ untergebracht. Sie besteht aus einem mit der Zwischenwelle 37 drehfest verbundenen Innenrotor 61 und aus einem exzentrisch dazu in dem Zwischenteil 26 frei drehbar geführten Außenrotor 62. Der Innenrotor ist bei Gerotorpumpen außenverzahnt und der Außenrotor innen verzahnt.

Dadurch, dass der Innenrotor 61 drehfest mit der Zwischenwelle 37 verbunden ist, die sich unabhängig von der jeweiligen Kupplungsstellung immer dreht, ist auch immer eine ausreichende Ölförderung sichergestellt. In dem Zwischenteil 26 sind auch die für die Pumpen dieses Typs typischen sichelförmigen Saugbeziehungsweise Druckräume 62 ausgebildet und auf kürzesten Wege mit nicht dargestellten Steuerventilen und den die Ringkolben enthaltenden Zylinderräumen verbunden. Symbolisch für diese Verbindungen ist ein Kanal 64 eingezeichnet. Die im Einzelnen nicht dargestellten Steuerventile sind entweder in dem in Fig. 1 mit 10 bezeichneten Steuerkasten oder in dem Zwischenteil 26 selbst untergebracht.

## Patentansprüche

1. Differentialgetriebeeinheit für Kraftfahrzeuge zur steuerbaren Verteilung der Antriebskraft auf zwei Ausgangswellen, bestehend aus einem Gehäuse und darin
a) einem Differentialgetriebe (4) mit einem Eingangsglied (14) und zwei mit den Ausgangswellen (7,8) antriebsverbundenen Ausgangsgliedern (16,19),
b) einem antriebsseitig mit dem Eingangsglied (14) des Differentialgetriebes antriebsverbundenen Übersetzungsgetriebe (5), und
c) zwei benachbarten hydraulisch steuerbaren Kupplungen (24,25), die einerseits mit der Abtriebsseite des Übersetzungsgetriebes (5) und andererseits mit je einer Ausgangswelle (7,8) antriebsverbunden sind, und die je einen Innenteil (32,42), einen Aussenteil (30,40), ein Lamellenpaket (33,43) und einen Druckring (35,45) aufweisen,
**dadurch gekennzeichnet, dass**
d) zwischen den beiden Kupplungen (24,25) ein gehäusefester Zwischenteil (26) angeordnet ist, der die hydraulische Betätigung (56,58,61,..) enthält,
e) die Druckringe (35,45) der Kupplungen (24,25) auf der dem Zwischenteil (26) zugewandten Seite der Kupplungen sind,
f) der Aussenteil (30) der der Abtriebsseite des Übersetzungsgetriebes (5) näheren ersten Kupplung (24) einerseits mit dem Übersetzungsgetriebe (5) und andererseits über eine den Zwischenteil (26) durchsetzende Zwischenwelle (37) mit dem Innenteil (42) der zweiten Kupplung (25) antriebsverbunden ist.
g) der Innenteil (32) der ersten Kupplung (24) mit der ersten Ausgangswelle (7) und der Aussenteil (40) der zweiten Kupplung (25) mit der zweiten Ausgangswelle (8) antriebsverbunden ist.

2. Differentialgetriebeeinheit nach Anspruch 1, **dadurch gekennzeichnet, dass** der Zwischenteil (26) beiderseits je einen Ringkolben (56,58) enthält, der über ein Drucklager (57,59) auf den Druckring (35,45) der zugeordneten Reibungskupplung (24,25) einwirkt.

3. Differentialgetriebeeinheit nach Anspruch 1, **dadurch gekennzeichnet, dass** die für die Betätigung der Reibungskupplungen (24,25) bestimmten Steuerventile mit dem Zwischenteil (26) verbunden sind.

4. Differentialgetriebeeinheit nach Anspruch 3, **dadurch gekennzeichnet, dass** die für die Betätigung der Reibungskupplungen (24,25) bestimmten Steuerventile in dem Zwischenteil (26) enthalten sind.

5. Differentialgetriebeeinheit nach Anspruch 1, **dadurch gekennzeichnet, dass** der Zwischenteil (26) eine Ölpumpe (60) enthält, deren den Zwischenteil (26) durchsetzende Zwischenwelle (37) mit einem Rotor (61) der Ölpumpe antriebsverbunden ist.

6. Differentialgetriebeeinheit nach Anspruch 5, **dadurch gekennzeichnet, dass** die Ölpumpe (60) eine Pumpe vom Gerotor -Typ ist, deren Innenrotor (61) auf der Zwischenwelle (37) sitzt und deren exzentrischer Aussenrotor (62) im Zwischenteil (26) drehbar geführt ist.

7. Differentialgetriebeeinheit nach Anspruch 1, **dadurch gekennzeichnet, dass** deren die beiden Reibungskupplungen (24,25) enthaltende Teil (2) des Gehäuses (1) eine achsnormale Passfläche (28) aufweist, an der der Zwischenteil (26) und ein Gehäusedeckel (27) anschließen.

8. Differentialgetriebeeinheit nach Anspruch 7, **dadurch gekennzeichnet, dass** der Zwischenteil (26) eine einerseits bezüglich des die Kupplungen (24,25) enthaltenden Gehäuseteiles (2) und andererseits bezüglich des Gehäusedeckels (27) zentrierte Platte ist, deren äusserer Rand (50) die Gehäusekontur bildet.

## Claims

1. Differential gear unit for motor vehicles for the controllable distribution of the driving power between two output shafts, composed of a housing and, within the latter,
a) a differential gear (4) having an input member (14) and having two output members (16, 19) drive-connected to the output shafts (7, 8),
b) a transmission gearing (5) drive-connected at the drive input side to the input member (14) of the differential gear, and
c) two adjacent, hydraulically controllable clutches (24, 25) which are drive-connected at one side to the drive output side of the transmission gearing (5) and at the other side to in each case one output shaft (7, 8) and which have in each case an inner part (32, 42), an outer part (30, 40), a plate pack (33, 43) and a thrust ring (35, 45),
**characterized in that**
d) an intermediate part (26) which is fixed with respect to the housing is arranged between the two clutches (24, 25), which intermediate part (26) contains the hydraulic actuating arrangement (56, 58, 61, ...),
e) the thrust rings (35, 45) of the clutches (24, 25) are on that side of the clutches which faces towards the intermediate part (26),
f) the outer part (30) of the first clutch (24), which is closer to the drive output side of the transmission gearing (5), is drive-connected at one side to the transmission gearing (5) and at the other side via an intermediate shaft (37), which extends through the intermediate part (26), to the inner part (42) of the second clutch (25),
g) the inner part (32) of the first clutch (24) is drive-connected to the first output shaft (7) and the outer part (40) of the second clutch (25) is drive-connected to the second output shaft (8).

2. Differential gear unit according to Claim 1, **characterized in that** the intermediate part (26) contains, at both sides, in each case one annular piston (56, 58) which acts via a thrust bearing (57,59) on the thrust ring (35, 45) of the associated friction clutch (24, 25).

3. Differential gear unit according to Claim 1, **characterized in that** the control valves for the actuation of the friction clutches (24, 25) are connected to the intermediate part (26).

4. Differential gear unit according to Claim 3, **characterized in that** the control valves for the actuation of the friction clutches (24, 25) are contained in the intermediate part (26).

5. Differential gear unit according to Claim 1, **characterized in that** the intermediate part (26) contains an oil pump (60) whose intermediate shaft (37), which extends through the intermediate part (26), is drive-connected to a rotor (61) of the oil pump.

6. Differential gear unit according to Claim 5, **characterized in that** the oil pump (60) is a Gerotor-type pump whose inner rotor (61) is seated on the intermediate shaft (37) and whose eccentric outer rotor (62) is guided in a rotatable manner in the intermediate part (26).

7. Differential gear unit according to Claim 1, **characterized in that** its part (2), which contains the two friction clutches (24, 25), of the housing (1) has a fitting surface (28) which is normal to the axis and at which the intermediate part (26) and a housing lid (27) are attached.

8. Differential gear unit according to Claim 7, **characterized in that** the intermediate part (26) is a plate which is centred firstly in relation to the housing part (2) which contains the clutches (24, 25) and secondly in relation to the housing lid (27), the outer edge (50) of which plate forms the housing contour.

## Revendications

1. Unité d'engrenage différentiel pour véhicules automobiles pour la répartition commandable de la force motrice sur deux arbres de sortie, constituée d'un carter et dans celui-ci :
a) d'un engrenage différentiel (4) avec un organe d'entrée (14) et deux organes de sortie (16, 19) connectés par entraînement aux arbres de sortie (7, 8),
b) d'un engrenage réducteur (5) connecté par entraînement du côté de l'entraînement à l'organe d'entrée (14) de l'engrenage différentiel, et
c) de deux embrayages commandables hydrauliquement adjacents (24, 25), qui sont connectés par entraînement d'une part au côté de sortie de l'engrenage réducteur (5) et d'autre part à un arbre de sortie respectif (7, 8), et qui présentent chacun une partie interne (32, 42), une partie externe (30, 40), un paquet de disques (33, 43) et une bague de pression (35, 45),
**caractérisée en ce que**
d) l'on dispose entre les deux embrayages (24, 25) une partie intermédiaire (26) fixée au carter, qui contient la commande hydraulique (56, 58, 61,..),
e) les bagues de pression (35, 45) des embrayages (24, 25) sont du côté des embrayages tourné vers la partie intermédiaire (26),
f) la partie extérieure (30) du premier embrayage (24) le plus proche du côté de la sortie de l'engrenage réducteur (5) est connectée par entraînement d'une part à l'engrenage réducteur (5) et d'autre part par le biais d'un arbre intermédiaire (37) traversant la partie intermédiaire (26) à la partie intérieure (42) du deuxième embrayage (25),
g) la partie intérieure (32) du premier embrayage (24) est connectée par entraînement au premier arbre de sortie (7) et la partie extérieure (40) du deuxième embrayage (25) est connectée par entraînement au deuxième arbre de sortie (8).

2. Unité d'engrenage différentiel selon la revendication 1, **caractérisée en ce que** la partie intermédiaire (26) contient de chaque côté un piston annulaire respectif (56, 58), qui agit par le biais d'un palier à pression (57, 59) sur la bague de pression (35, 45) de l'embrayage à friction associé (24, 25).

3. Unité d'engrenage différentiel selon la revendication 1, **caractérisée en ce que** les soupapes de commande prévues pour la commande des embrayages à friction (24, 25) sont connectées à la partie intermédiaire (26).

4. Unité d'engrenage différentiel selon la revendication 3, **caractérisée en ce que** les soupapes de commande prévues pour la commande des embrayages à friction (24, 25) sont contenues dans la partie intermédiaire (26).

5. Unité d'engrenage différentiel selon la revendication 1, **caractérisée en ce que** la partie intermédiaire (26) contient une pompe à huile (60), dont l'arbre intermédiaire (37) traversant la partie intermédiaire (26) est connecté par entraînement à un rotor (61) de la pompe à huile.

6. Unité d'engrenage différentiel selon la revendication 5, **caractérisée en ce que** la pompe à huile (60) est une pompe du type gérotor, dont le rotor intérieur (61) est disposé sur l'arbre intermédiaire (37) et dont le rotor extérieur excentrique (62) est guidé à rotation dans la partie intermédiaire (26).

7. Unité d'engrenage différentiel selon la revendication 1, **caractérisée en ce que** sa partie (2) de carter (1) contenant les deux embrayages à friction (24, 25) présente une surface d'ajustement normale à l'axe (28), à laquelle se raccordent la partie intermédiaire (26) et un couvercle du carter (27).

8. Unité d'engrenage différentiel selon la revendication 7, **caractérisée en ce que** la partie intermédiaire (26) est une plaque centrée d'une part par rapport à la partie de carter (2) contenant les embrayages (24, 25), et d'autre part par rapport au couvercle du carter (27), dont le bord extérieur (50) forme le contour du carter.
